# EUROPEAN PATENT SPECIFICATION

(11) **EP 3 473 564 B1**
(45) Date of publication and mention of the grant of the patent: **26.08.2020**
(21) Application number: 16906236.1
(22) Date of filing: 21.06.2016
(51) Int. Cl.: B65B 35/46, B65G 54/02, B65G 43/08, B65G 47/08

(54) **PRODUCT CONVEYING DEVICE**
PRODUKTFÖRDERVORRICHTUNG
DISPOSITIF DE TRANSPORT DE PRODUITS

(43) Date of publication of application: 24.04.2019
(73) Proprietor: Unicharm Corporation, Shikokuchuo-shi, Ehime 799-0111 (JP)
(72) Inventor: MURAKAMI, Seiji, Kanonji-shi Kagawa 769-1602 (JP); ODA, Takeshi, Kanonji-shi Kagawa 769-1602 (JP)
(74) Representative: Staeger & Sperling Partnerschaftsgesellschaft mbB
(86) International application number: PCT/JP2016/068360
(87) International publication number: WO 2017/221317

(56) References cited:
- JP-A- 2006 264 737
- JP-A- 2015 528 779
- JP-A- 2015 536 888
- JP-U- S5 277 185
- US-A1- 2011 289 886
- US-A1- 2013 227 914

## Description

### Technical Field

The present disclosure relates to a product transport apparatus.

### Background Art

There is known a product transport apparatus that receives products, such as disposable diapers, sanitary napkins, or the like, which are continuously manufactured using a manufacturing facility of a factory or the like, from a manufacturing apparatus; transports the products while counting them; and supplies the products to a packaging apparatus, in order to collectively package a predetermined number of the products when shipping them. For example, PTL 1 discloses a transport apparatus (accumulation apparatus) that is provided with evenly spaced blades in a direction of transport of a transport belt, and that transports products by driving the transport belt while the products each are housed between blades adjacent to each other in the direction of transport.

### Citation List

### Patent Literature

PTL 1: Japanese Unexamined Patent Application Publication No. 5-39115. Further prior art in this technical field is disclosed in documents US 2013/227914 A1 and JP 2015-536888 A, wherein the document US 2013/227914 A1 is considered to be the closest prior art.

### Summary of Invention

### Technical Problem

However, in the transport apparatus according to the related art such as that described in PTL 1, since the blades are fixed to the transport belt, the interval between the blades adjacent to each other in the direction of transport cannot be adjusted. Thus, if products with different thicknesses are required to be transported, it is difficult to stably hold the products. Moreover, since the interval between the blades is fixed, a product is not compressed between the blades during transport. A step of compressing the product is additionally required for packaging the product after the product has been discharged from the transport apparatus. Therefore, it has been difficult to efficiently manufacture the product.

The present disclosure has been made in light of the above-described issues, and it is an object of the present disclosure to provide a product transport apparatus that can transport products while compressing the products.

### Solution to Problem

The invention of the product transport apparatus is defined according to the combination of features in claim 1. A main disclosure to attain the above object is a product transport apparatus, comprising: a rail that defines an orbital transport path; a plurality of movable parts that move along the rail; blades respectively supported by the plurality of the movable parts; and a control unit capable of individually controlling positions of the movable parts on the transport path, the product transport apparatus being configured to transport a product in a direction of transport along the transport path, the plurality of the movable parts including a first movable part that supports a first blade, and a second movable part that is provided upstream of the first movable part in the direction of transport and that supports a second blade, the transport path having provided thereon a housing place for housing the product between the first blade and the second blade, a passing place through which the product passes while being housed between the first blade and the second blade, and a discharge place for discharging the product from between the first blade and the second blade, the control unit being configured to control positions of the first movable part and the second movable part, respectively, such that an interval between the first movable part and the second movable part in the direction of transport is a predetermined distance in the housing place, and control the positions of the first movable part and the second movable part, respectively, such that the interval is smaller than the predetermined distance in the passing place.

Other features of the disclosure will become apparent from the description in the specification and the accompanying drawings.

### Advantageous Effects of Invention

According to the present disclosure, it is possible to provide the product transport apparatus that can transport products while compressing the products.

### Brief Description of Drawings

[Fig. 1] Fig. 1 is a schematic plan view illustrating a basic configuration of a product transport apparatus 1 (transport apparatus 1).
[Fig. 2] Figs. 2A to 2C illustrate an operation of housing products S in the transport apparatus 1.
[Fig. 3] Fig. 3 illustrates an operation of transporting products S in a round portion of a transport path.
[Fig. 4] Figs. 4A to 4C illustrate an operation of transporting the products S after passing through the round portion on the transport path.
[Fig. 5] Figs. 5A to 5C illustrate a discharge operation for products S.
[Fig. 6] Fig. 6 illustrates a state in which a product S is housed using two pairs of blades 130,

### Description of Embodiments

At least the following matters will become apparent from the description in the specification and the accompanying drawings.

A product transport apparatus, comprising: a rail that defines an orbital transport path; a plurality of movable parts that move along the rail; blades respectively supported by the plurality of the movable parts; and a control unit capable of individually controlling positions of the movable parts on the transport path, the product transport apparatus being configured to transport a product in a direction of transport along the transport path, the plurality of the movable parts including a first movable part that supports a first blade, and a second movable part that is provided upstream of the first movable part in the direction of transport and that supports a second blade, the transport path having provided thereon a housing place for housing the product between the first blade and the second blade, a passing place through which the product passes while being housed between the first blade and the second blade, and a discharge place for discharging the product from between the first blade and the second blade, the control unit being configured to control positions of the first movable part and the second movable part, respectively, such that an interval between the first movable part and the second movable part in the direction of transport is a predetermined distance in the housing place, and control the positions of the first movable part and the second movable part, respectively, such that the interval is smaller than the predetermined distance in the passing place.

With the product transport apparatus, by controlling the positions of a plurality of the movable parts on the transport path, a product can be transported in a state of being housed between blades adjacent to each other in the direction of transport while the interval between the blades adjacent to each other is freely changed. Thus, when the product is transported in the passing place on the transport path, it is possible to transport the product while compressing the product, by setting the interval between the blades to be smaller than the interval in the housing place (the predetermined distance).

In such a product transport apparatus, it is desirable that the control unit controls the positions of the first movable part and the second movable part, respectively, such that the interval between the first movable part and the second movable part in the direction of transport is smaller than the predetermined distance in the discharge place.

With the product transport apparatus, at a point when a transported product has arrived in the discharge place on the transport path, the thickness of the product (the width in the direction of transport) has been in a compressed state. Hence, it is possible to compress the product in the transport apparatus. Thus, it is no longer required to perform an additional step of compressing the product after the product has been discharged from the transport apparatus, thereby increasing manufacturing efficiency for products.

In such a product transport apparatus, it is according to the invention to further include a third movable part that is provided upstream of the second movable part in the direction of transport and that supports a third blade. The control unit controls, in the passing place, a position of the third movable part such that an interval between the second movable part and the third movable part in the direction of transport is equal to the interval between the first movable part and the second movable part in the direction of transport.

With the product transport apparatus, two or more products adjacent to each other in the direction of transport can be simultaneously transported by the first to third blades (the movable parts) adjacent to one another in the direction of transport. That is, a product group composed of a plurality of products can be collectively transported and discharged. Moreover, by individually adjusting the positions of the movable parts, the plurality of products can be appropriately subjected to compression and/or the like in the transport operation. Accordingly, it is possible to transport/compress a plurality of products, which are intermittently manufactured, as a product group composed of a predetermined number of products, while counting the products.

In such a product transport apparatus, it is according to the invention that the control unit controls, in the passing place, the interval between the first movable part and the second movable part to be a first interval that is smaller than the predetermined distance, and then the positions of the first movable part and the second movable part, respectively, such that the interval between the first movable part and the second movable part is a second interval that is smaller than the first interval.

With the product transport apparatus, a product can be transported while the thickness (the width) of the product housed between blades is further compressed. Thus, the product is likely to be suppressed from being released from between the blades during transport. Moreover, if the transport path includes a round portion (a curve), the interval between the distal ends of the blades increases when the blades pass through the round portion. Thus, by adjusting the interval between the blades, the product is less likely to be released even when the blades pass through the round portion, so that stable transport is more likely to be provided.

In such a product transport apparatus, it is desirable that the control unit controls, in the passing place, the interval between the first movable part and the second movable part to be the first interval that is smaller than the predetermined distance, and then the positions of the first movable part and the second movable part, respectively, such that the interval between the first movable part and the second movable part is a third interval that is larger than the first interval.

With the product transport apparatus, even if the position of a product held between blades during transport is deviated, it is possible to temporarily weaken the holding force against the product by the blades, by increasing the interval between the blades. Thus, a deviation of the holding position of the product between the blades can be eliminated, and the holding position can be adjusted again if needed. This can facilitate neat alignment in the direction of transport of a plurality of products.

In such a product transport apparatus, it is desirable that a round portion, where the transport path being curved, is provided between the housing place and the discharge place, and the control unit controls, after the movable parts have passed through the round portion and before the movable parts arrive in the discharge place, the positions of the first movable part and the second movable part, respectively, such that the interval between the first movable part and the second movable part is a fourth interval that is smaller than the third interval.

With the product transport apparatus, even if the holding position of a product between blades is deviated when the blades pass through the round portion, the interval between the blades is increased once (the third interval), and then decreased again (the fourth interval). Thus, the product with the positional deviation having been eliminated can be compressed and held again by the blades. Accordingly, a positional deviation less likely occurs while a plurality of products are aligned.

In such a product transport apparatus, it is desirable that a discharge unit is provided in the discharge place, and pushes out and discharges, to outside of the product transport apparatus, the product housed between two of the blades adjacent to each other in the direction of transport, and the discharge unit collectively discharges a product group composed of a predetermined number of the products arranged side by side adjacent to each other in the direction of transport.

With the product transport apparatus, a predetermined number (plurality) of products aligned in a row in the direction of transport are compressed in the direction of transport, thereby decreasing the length in the row direction of a product group composed of the predetermined number of products, so that the product group has a compact shape as a whole. By discharging the product group at a time in this state, a quick transition to packaging work or other work can be made immediately after discharge, thereby increasing manufacturing efficiency for products.

In such a product transport apparatus, it is desirable to further include an n-th movable part that supports an n-th blade arranged most upstream in the direction of transport among the blades housing the product group; and an n+1-th movable part that is adjacent to the upstream side in the direction of transport of the n-th movable part and that supports an n+1-th blade, wherein the product is not housed between the n-th blade and the n+1-th blade.

With the product transport apparatus, by avoiding another product from being arranged continuously upstream/downstream in the direction of transport of the product group that is to be discharged, the other product is likely to be suppressed from being discharged together with the product group by the influence of the frictional force, when discharging the product group to be discharged. Moreover, even when a deviation in the direction of transport occurs between the position of the discharge unit and the position of the movable part (the blade), the other product is likely to be restrained from being erroneously discharged.

In such a product transport apparatus, it is desirable that the control unit controls, before the product group is discharged by the discharge unit, a plurality of the movable parts to stop at predetermined positions in the discharge place, respectively, the plurality of the movable parts respectively supporting the plurality of the blades that house the product group.

With the product transport apparatus, the movable parts are stopped in the predetermined discharge place and then discharge is performed, and thus the product group composed of a predetermined number of products is more likely to be discharged constantly from the same place in the discharge operation that is intermittently performed. Accordingly, even when the discharge operation is repeated, the discharge place is more likely to be stable, and the product groups can be transported and discharged in the same state even in a manufacturing facility that continuously (intermittently) manufactures products in a large quantity.

In such a product transport apparatus, it is desirable that the control unit controls, in the discharge place, the positions of the first movable part and the second movable part, respectively, such that the interval between the first movable part and the second movable part is a fifth interval that is larger than a minimum value of the interval between the first movable part and the second movable part when the product group is transported in the passing place.

With the product transport apparatus, when a product housed between blades is discharged, friction that acts between the blades and the product can be decreased. Thus, the product can be smoothly discharged from between the blades.

In such a product transport apparatus, it is desirable that the control unit causes the first movable part to stop at a predetermined position in the housing place, and the position of the second movable part to move based on product detection information indicative of detection of charge of the product to the product transport apparatus.

With the product transport apparatus, since the position of a movable part is controlled in response to the product detection information as a trigger, a product can be securely housed between blades even when a plurality of products are supplied to the transport apparatus at various timings. That is, even when products are supplied at various intervals, the product transport apparatus can adjust to the timings and house the products.

In such a product transport apparatus, it is desirable that both the discharge place and the housing place are provided in a same straight portion on the transport path.

With the product transport apparatus, since a product is transported without passing through a round portion or the like from the housing unit to the discharge unit, such an issue as an effect of a centrifugal force caused when passing through the round portion less likely occurs, and the holding position of a product between blades is likely to be suppressed from being deviated during transport of the product. Thus, the product can be more stably transported.

In such a product transport apparatus, it is desirable that the product transport apparatus has an up-down direction, and the product transport apparatus includes an upper transport unit including the rail, the plurality of the movable parts, and the blades, and a lower transport unit that is provided below the upper transport unit with a predetermined interval in the up-down direction and that includes the upper transport part including the rail, the plurality of the movable parts, and the blades, and one of the movable parts provided in the upper transport unit and a corresponding one of the movable parts provided in the lower transport unit cooperatively transport the product.

With the product transport apparatus, since an upper region and a lower region of a product each are held by a pair of blades, the product is likely to be suppressed from being tilted in the housing place and the passing place. Moreover, since the predetermined interval is provided between the upper blades and the lower blades in the up-down direction, when the product is discharged, the product can be pushed out in the area of the interval. Since the center portion and its periphery in the up-down direction of the product can be pushed, the force of pushing out the product is more likely evenly applied, and it is possible to facilitate the stable product discharge operation.

In such a product transport apparatus, it is desirable that = Embodiment =

### <Basic Configuration of Product Transport Apparatus>

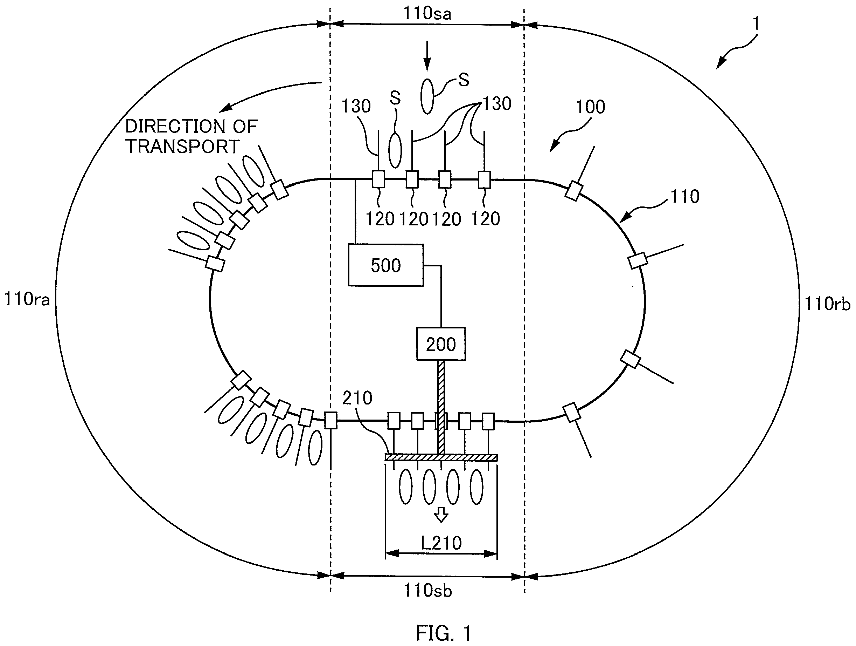

Fig. 1 is a schematic plan view illustrating a basic configuration of a product transport apparatus 1 (hereinafter, also simply referred to as "transport apparatus 1") serving as an example of a product transport apparatus according to this embodiment. The transport apparatus 1 weighs products, such as disposable diapers or sanitary napkins (hereinafter, also referred to as products S), which are intermittently manufactured in a manufacturing line of a factory or the like and transports the products in a predetermined direction. The transport apparatus 1 includes a transport unit 100, a discharge unit 200, and a control unit 500.

The transport unit 100 includes a rail 110, movable parts 120, and blades 130. The rail 110 is a member that forms an orbital transport path. With the transport apparatus 1, products S are transported in a direction of transport along the rail 110 (transport path). In the example in Fig. 1, the rail 110 is elliptical (oval). The rail 110 has two straight portions 110sa and 110sb parallel to each other, and two round portions 110ra and 110rb that are curved and connect both ends of the straight portions 110sa and 110sb together. Note that the transport path does not have to be elliptical as illustrated in Fig. 1, and may form a trapezoidal orbit, a triangular orbit, or an orbit with another desirable shape in accordance with, for example, the size and arrangement of a manufacturing facility.

In this embodiment, a plurality of coils (not illustrated) that generate magnetic fields when an electric current is applied to the rail 110 are provided in the direction of transport. Magnetic poles can be successively changed in the direction of transport by controlling the supplied electric current. Thus, the movable parts 120 can be propelled in the direction of transport according to the principle of a linear motor. That is, the rail 110 functions as a stator of the linear motor.

The movable parts 120 are moving bodies that can move along the rail 110. In the transport apparatus 1, a plurality of the movable parts 120 are arranged along the transport path. Each of the movable parts 120 is provided with a magnetic body (not illustrated). The magnetic body generates an attractive force and a repulsive force between the movable part 120 and the coils provided at the rail 110. Thus, the movable part 120 can move along the rail 110 (the stator). The movable part 120 is connected to the rail 110 via, for example, a guide roller or the like. The movable part 120 can stably move on the transport path (the rail 110) without a fall from the rail during movement, or positional deviation or slipping in the direction of transport. Moreover, each of the movable parts 120 is provided with a position detector (for example, a linear encoder), which is not illustrated. Positional information about the movable part 120 on the transport path can be transmitted to the control unit 500.

The blade 130 is a plate member that is supported by the movable part 120. As illustrated in Fig. 1, the blade 130 is provided to protrude in a direction perpendicular to the transport path (the elliptical shape) outward from the center side of the transport path, that is, in a direction normal to the transport path. When the movable part 120 orbits along the rail 110, the blade 130 orbits on the transport path together with the movable part 120. Hereinafter, a supported-end side of the blade 130 supported by the movable part 120 is referred to as "proximal side" of the blade 130, and a free-end side of the blade 130 not supported by the movable part 120 is referred to as "distal side" of the blade 130. When the transport apparatus 1 transports a product S, the product S is housed so as to be sandwiched between two blades 130 (movable parts 120) adjacent to each other in the direction of transport, and in this state the two blades 130 (the movable parts 120) are moved together in the direction of transport. An operation of housing and transporting a product S will be described later in detail.

The discharge unit 200 is a mechanism that discharges a product S transported along the transport path to the outside from the transport apparatus 1 in a predetermined place (a discharge place) on the transport path. The discharge unit 200 is desirably provided in a straight portion on the transport path to collectively discharge a plurality of products S arranged side by side in the direction of transport. In this embodiment, the discharge unit 200 is provided at a position in the straight portion 110sb (or the straight portion 110sa) of the rail 110.

The discharge unit 200 includes a discharge pusher 210 that is rod-shaped and that has a predetermined length L210 in the direction of transport. The discharge pusher 210 can slide in a direction perpendicular to the transport path. When the discharge pusher 210 moves outward from the center side of the orbital transport path, the discharge pusher 210 pushes out products S each housed between the blades 130, 130 to the outside of the transport apparatus 1 (to the outside of the transport path). Thus, in the straight portion 110sb on the transport path, products S arranged side by side in the range of the length L210 in the direction of transport are collectively discharged (see Fig. 1). The discharge pusher 210 can slide without interfering with the blades 130 or the rail 110.

The control unit 500 individually controls the positions of the movable parts 120 on the transport path. In this embodiment, the positions of the movable parts 120 are individually controlled by controlling an electric current that is supplied to the plurality of coils provided on the rail 110 based on positional information transmitted from the movable part 120 and by propelling and stopping the movable part 120 in the direction of transport. In addition, the control unit 500 may control the operation of the discharge unit 200.

### <Operation of Transport Apparatus 1>

An operation of transporting a product S by using the transport apparatus 1 is described below more specifically. When a product S is transported by using the transport apparatus 1, the following steps are repeatedly performed: a housing step of housing a product S between two blades 130, 130 in a predetermined housing place on the transport path; a transport step of transporting the housed product S to a predetermined discharge place on the transport path; a discharge step of discharging the product S in a discharge place; and a return step of, after the product S has been discharged, returning the movable parts 120 (the blades 130) from the discharge place to the housing place along the transport path.

The movable parts 120 and the blades 130 have predetermined thicknesses (widths) in the direction of transport. In the following description, however, the thicknesses are ignored. For example, it is assumed that the interval between the movable parts 120, 120 adjacent to each other in the direction of transport represents the distance between the center position in the direction of transport (thickness direction) of one of the movable parts 120 and the center position in the direction of transport (thickness direction) of the other of the movable parts 120. Also, it is assumed that the interval between the blades 130, 130 adjacent to each other in the direction of transport is basically equivalent to the interval between the movable parts 120, 120 respectively supporting the blades 130.

### (Housing Step)

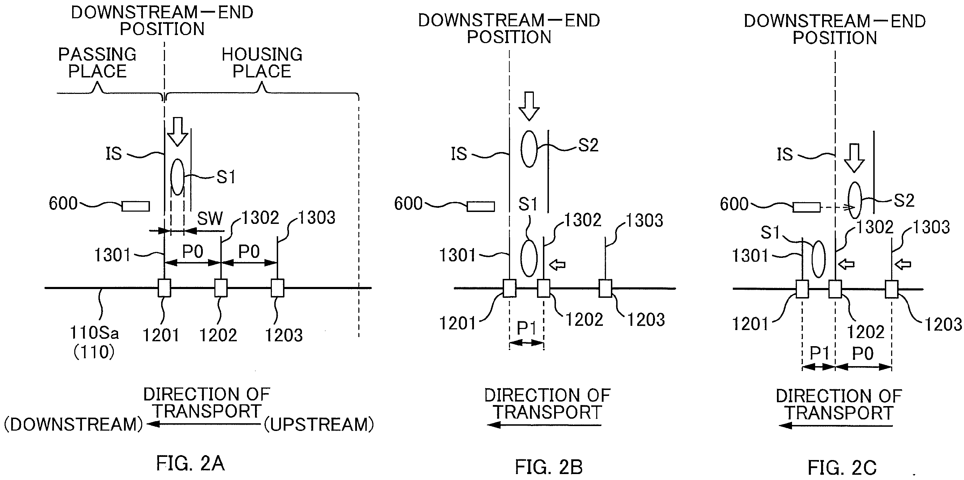

Figs. 2A to 2C illustrate an operation of housing products S in the transport apparatus 1. Figs. 2A to 2C illustrate operations of a plurality of the movable parts 120 and a plurality of the blades 130 adjacent to one another in the direction of transport in chronological order. More specifically, Figs. 2A to 2C illustrate operations of a first movable part 1201 that supports a first blade 1301, a second movable part 1202 that is provided upstream of the first movable part 1201 in the direction of transport and that supports a second blade 1302, and a third movable part 1203 that is provided upstream of the second movable part 1202 in the direction of transport and that supports a third blade 1303.

Products S are intermittently manufactured by a manufacturing apparatus or the like (not illustrated) and then are successively supplied to the transport apparatus 1 from a charge port IS. As illustrated in Fig. 2A, the charge port IS is provided at a predetermined position on the straight portion 110sa of the transport path (the rail 110) at a position at which the charge port IS faces the rail 110. In this embodiment, on the transport path, a region from a downstream-end position of the charge port IS in the direction of transport to a predetermined position located upstream in the direction of transport serves as the "housing place" of a product S (see Fig. 2A). The "housing place" is a place for housing each of the products S between two blades 130, 130 adjacent to each other in the direction of transport. Also, on the transport path, a region from a position located downstream in the direction of transport of the downstream-end position of the charge port IS in the direction of transport to the "discharge place" in which the discharge unit 200 is provided serves as the "passing place".

In the housing step, first, the first movable part 1201 and the first blade 1301 are arranged at the transport-direction downstream-end position of the charge port IS. That is, the first movable part 1201 moves to the downstream-end position in the housing place in the direction of transport. At this time, the second movable part 1202 and the second blade 1302 are arranged upstream of the position of the first movable part 1201 in the direction of transport only by a predetermined distance P0. That is, in the housing place, the operations of the first movable part 1201 and the second movable part 1202 are controlled such that the interval between the first movable part 1201 and the second movable part 1202 in the direction of transport is P0, and are in a standby state for housing a product S. In addition, the second movable part 1202 and the third movable part 1203 may be controlled to be arranged at an interval of P0. The length of the interval P0 is set to be larger than at least a width SW of the product S in the direction of transport. Thus, the product S can be smoothly housed between the first blade 1301 and the second blade 1302.

In this embodiment, since the housing place is provided in the straight portion 110sa on the transport path, the interval P0 between the first blade 1301 and the second blade 1302 is equal to the interval P0 between the first movable part 1201 and the second movable part 1202. By controlling the respective positions of the movable parts 120, the respectively positions of the blades 130 can be controlled. Thus, the housing operation for products S can be stably performed. Also, since the first blade 1301 and the second blade 1302 adjacent to each other in the direction of transport are supported in parallel to each other, the first blade 1301 and the second blade 1302 is likely to stably hold a product S housed therebetween.

The charge port IS is provided with a detection sensor 600 for detecting charge of a product S. The detection sensor 600 transmits product detection information indicating charge of a product S to the control unit 500 at a timing at which the product S passes through the position of the detection sensor 600 in the charge port IS. The control unit 500 controls the second movable part 1202 to move downstream in the direction of transport based on the received product detection information such that the interval between the first movable part 1201 and the second movable part 1202 is P1 (defined as the first interval) . Thus, a first product S1 is housed between the first blade 1301 and the second blade 1302 and is held thereby (see Fig. 2B). In this embodiment, the length of the interval P1 is smaller than the interval P0 (the predetermined distance) (P1<P0) . Furthermore, the length of the interval P1 is desirably smaller than the width SW of the product S1 (P1<SW). With this setting, since the product S1 is compressed in the direction of transport, the product S1 less likely falls (is less likely to be released) from between the first blade 1301 and the second blade 1302 during the operation of transporting the product S1. Note that while Fig. 2B illustrates that the interval P1 between the first blade 1301 and the second blade 1302 is larger than the width SW of the product S1 for the convenience of description, if P1<SW, a gap is not formed between the product S1 and either of the first blade 1301 and the second blade 1302.

The first movable part 1201 (the first blade 1301) and the second movable part 1202 (the second blade 1302) housing the first product S1 are controlled to move downstream in the direction of transport with the interval P1 maintained, and the second movable part 1202 (the second blade 1302) is controlled to be located at the downstream end of the charge port IS in the direction of transport. Then, the position of the third movable part 1203 is controlled such that the interval between the second movable part 1202 and the third movable part 1203 is P0. Thus, the second movable part 1202 (the second blade 1302) and the third movable part 1203 (the third blade 1303) are in a standby state for housing a second product S2 that is to be supplied subsequently to the first product S1 (see Fig. 2C).

Then, when the detection sensor 600 detects the second product S2, the control unit 500 controls the third movable part 1203 to move downstream in the direction of transport such that the interval between the second movable part 1202 and the third movable part 1203 is P1. Thus, the second product S2 is housed between the second blade 1302 and the third blade 1303 and is held thereby. Since the position of the movable part 120 (the blade 130) is controlled in response to detection of a product S by the detection sensor 600 as a trigger, a product S can be correctly housed between the blades 130, 130 even when a plurality of products S are supplied to the transport apparatus 1 at various timings. That is, even when products S are supplied at various intervals, the transport apparatus 1 can adjust to the timings and house the products S.

By repeating the operation illustrated in Figs. 2A to 2C a predetermined number of times, a number n-1 of products S are housed side by side with the interval P1 in the direction of transport by the first blade 1301 to an n-th blade 130n. Thus, the number n-1 of products S can be collectively transported in an aligned state in the direction of transport.

### (Transport Step)

A plurality of products S are transported in the direction of transport in the "passing place" on the transport path while each product S is housed between two blades 130, 130 adjacent to each other in the direction of transport. At this time, the transport is performed by setting the interval P1 between the blades 130, 130 adjacent to each other in the direction of transport as described above to be smaller than the interval P0 in a housing standby state. Thus, the product S1 can be less likely to be released from between the blades 130, 130. Also, in the transport step, the transport can be further efficiently performed by controlling the movable parts 120 as follows in accordance with the transport path.

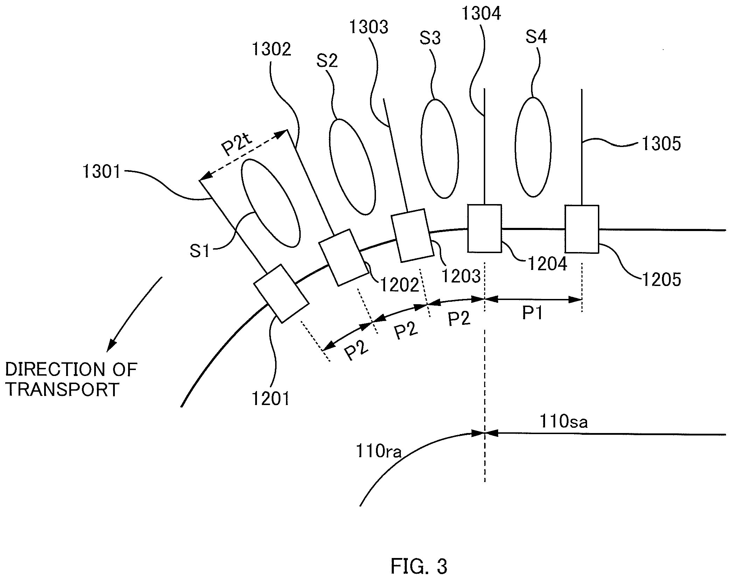

Fig. 3 illustrates an operation of transporting products S in a round portion of the transport path. In Fig. 3, it is assumed that four products S including a first product S1 to a fourth product S4 are collectively transported by five movable parts 120 (blades 130) including the first movable part 1201 to a fifth movable part 1205 arranged side by side from downstream to upstream in the direction of transport.

As described with reference to Fig. 1, the rail 110 (the transport path) according to this embodiment includes the round portions 110ra, 110rb. When the housing place is provided in the straight portion 110sa on the transport path and the discharge place is provided in the straight portion 110sb on the transport path, the "passing place" includes the round portion 110ra without fail. That is, in a process of transporting a product S1, the product S1 passes through a curved portion (the round portion 110ra) of the transport path. the blades 130 are supported by the movable parts 120, respectively, and thus, when the movable parts 120 pass through the round portion 110ra, the interval between the distal ends of the two blades 130 adjacent to each other in the direction of transport is larger than the interval between the proximal ends thereof. For example, when the first movable part 1201 and the second movable part 1202 move with the interval P1 maintained, the interval between the distal ends of the first blade 1301 and the second blade 1302 is larger than P1. In this case, the first product S1 housed between the first blade 1301 and the second blade 1302 may be released in a centrifugal direction by the centrifugal force that is generated when passing through the round portion 110ra.

Thus, the control unit 500 controls the positions of the movable parts such that the interval P2 (defined as the second interval) between two movable parts 120, 120 adjacent to each other is smaller than the interval P1 (the first interval) in the passing place (in particular, the round portion 110ra) from the housing place to the discharge place on the transport path (P2<P1). In Fig. 3, when the first movable part 1201 and the second movable part 1202 pass through the round portion 110ra (the passing place), the interval between the first movable part 1201 and the second movable part 1202 in the direction of transport is changed from P1 to P2. Thus, an interval P2t between the distal ends of the first blade 1301 and the second blade 1302 can be further decreased and the first product S1 is less likely to be released.

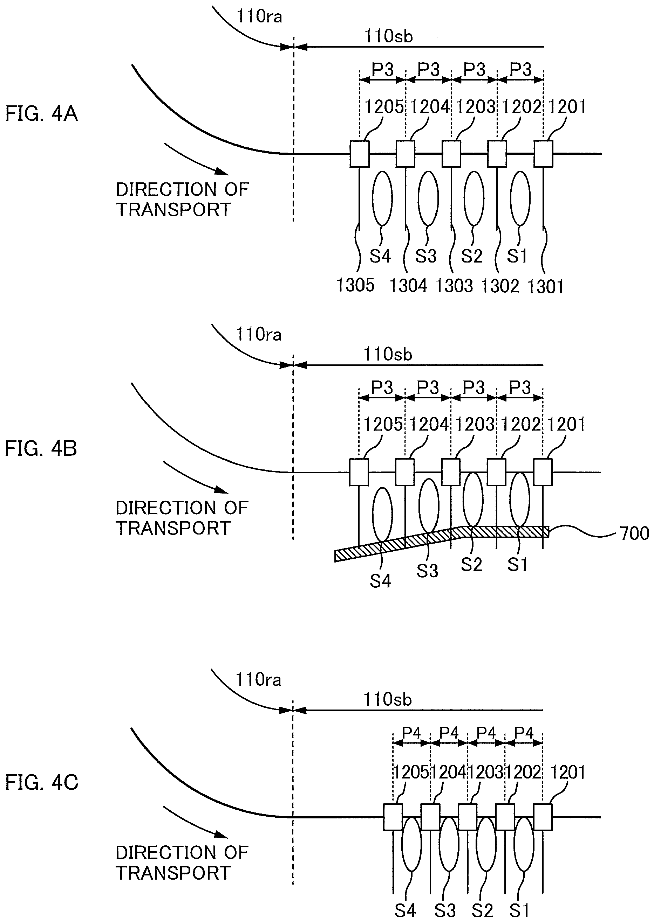

Figs. 4A to 4C illustrate an operation of transporting products S after passing through a round portion on the transport path. As described above, in the round portion on the transport path, the interval between the distal ends of two blades 130, 130 adjacent to each other in the direction of transport is likely to be increased. Hence, even when the interval P2 between the movable parts 120, 120 is adjusted and a product S is suppressed from being released from between the two blades 130, 130, the holding position of the product S between the blades 130, 130 may be deviated. In this case, when a plurality of products S are collectively pushed out during the discharge, the position of each product S likely varies, and the variation in position may result in an issue in a packaging step after the discharge.

Therefore, in the transport step before transition to the discharge step, it is desirable to eliminate a positional deviation of a product S between two blades 130, 130 and to align a plurality of products S to be transported side by side in the direction of transport. To eliminate a positional deviation, the interval between two movable parts 120, 120 adjacent to each other in the direction of transport as illustrated in Fig. 4A is increased from P2 to P3 in a phase in which each of the movable parts 120 has passed through the round portion 110ra and arrived in the straight portion 110sb. The interval P3 (defined as the third interval) is desirably larger than at least the interval P1 (and P2) (P3>P1>P2) and is more desirably larger than the width SW of the product S1 (P3>SW). Thus, the holding force of the blades 130, 130 against the product S is temporarily weakened, and the position of the product S can be adjusted between the blades 130, 130. Each of the movable parts 120 linearly moves on the transport path, and thus even when the holding force of the blades 130, 130 is weakened, the product S is less likely to be released from between the blades 130, 130.

Then, the positions of a number n of adjacent products S are adjusted to be aligned with the direction normal to the transport path by using a predetermined position adjusting device 700. In Fig. 4B, a plate-shaped guide member having an inclined portion that is inclined in the direction of transport is used as the position adjusting device 700. Each product S (the movable part 120) is sandwiched between the position adjusting device 700 and the rail 110 when passing through the region provided with the position adjusting device 700, thereby aligning the position of the product S in the direction normal to the transport path, so that a plurality of products S are aligned. Alternatively, the position adjusting device 700 may include a mechanism substantially similar to the discharge pusher 210 of the discharge unit 200, and the position of each product S may be adjusted by pressing the position of the product S from the outside to the center side in the direction of transport at a position at which the mechanism faces the transport path.

The interval between two movable parts 120, 120 adjacent to each other in the direction of transport as illustrated in Fig. 4C is decreased from P3 to P4. The interval P4 (defined as the fourth interval) is desirably smaller than the interval P3 (P4<P3) and is more desirably smaller than the width SW of the product S1. Thus, the aligned products S are held by the blades 130, 130 again. In this way, the holding force of the two blades 130 adjacent to each other in the direction of transport is temporarily relaxed to adjust the position of the product S, and then the products S are held again, thereby being able to transport a number n of products S to the discharge place while the positions of the number n of products S are correctly aligned.

The position adjusting operation described with reference to Figs. 4A to 4C may be performed before passing through the round portion on the transport path. For example, even when the transport path does not have a round portion and is defined by only straight portions, an operation in which a plurality of products S are collectively discharged can be stably performed by correctly aligning the positions of the products S.

### (Discharge Step)

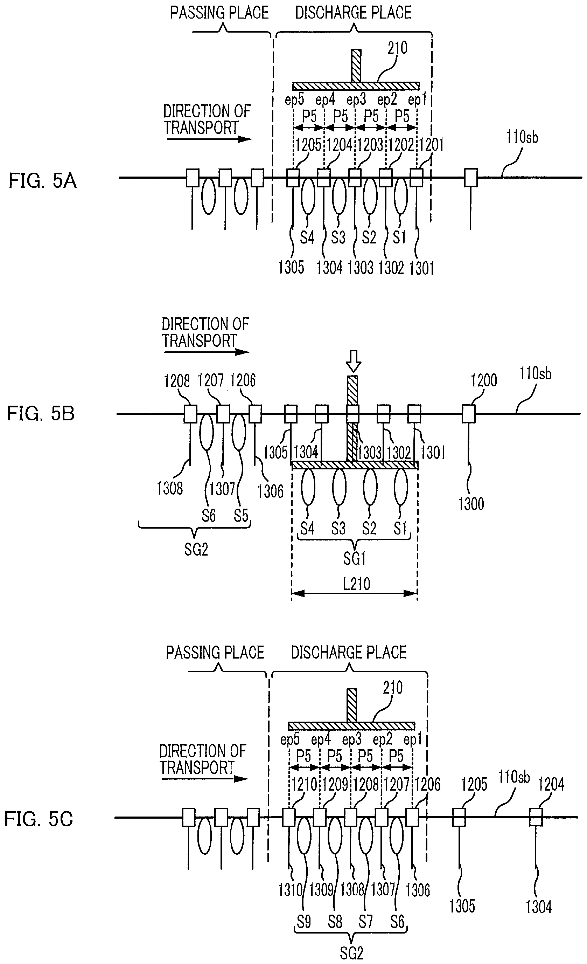

A plurality of products S that is transported on the transport path is discharged to the outside of the transport apparatus 1 in the discharge place provided downstream of the housing place in the direction of transport (the straight portion 110sb in Fig. 1). Figs. 5A to 5C illustrate a discharge operation for products S.

The movable parts 1201 to 1205 move from the passing place to a transport place while the mutual positions of the movable parts 1201 to 1205 are adjusted to maintain the above-described interval P4. If the interval P4 is smaller than the width SW of a product S, products S1 to S4 each are compressed and have a width smaller than the original product width S at a time when the products S1 to S4 arrive in the discharge place on the transport path. At least the interval P4 between two blades 130, 130 adjacent to each other in the direction of transport is smaller than the interval P0 in a housing standby state. Since a plurality of products S aligned in a row in the direction of transport are compressed in the direction of transport, the length in the row direction of a product group SG composed of the plurality of products S is decreased, and the product group SG has a compact shape as a whole. By discharging the product group SG in this state, a quick transition to packaging work or other work can be made immediately after discharge, thereby being able to increase manufacturing efficiency.

In this embodiment, in order to collectively discharge a predetermined number of products S (a product group SG) aligned in the direction of transport in a row by a single discharge operation, the holding force of the blades 130 against the products S is weakened to allow each of the products S to be easily released from between two blades 130, 130 in the discharge step. More specifically, when the movable parts 120 are stopped in the discharge place for standby for discharge, the positions of the movable parts 120 are controlled such that the interval between each two blades 130, 130 adjacent to each other in the direction of transport is increased from P4 to P5. The interval P5 (defined as the fifth interval) is larger than the intervals P2 and P4 and smaller than the interval P0 in the housing standby state (P2,P4<P5<P0). That is, the interval (P5) between the movable parts 120, 120 when stopping in the discharge place is larger than the minimum value (P2 or P4) of the interval between the movable parts 120, 120 when being transported in the passing place.

In Fig. 5A, among the first movable part 1201 to the fifth movable part 1205 that move together in the direction of transport on the transport path, the fifth movable part 1205 stops at a predetermined position eP5 in the discharge place, and the fourth movable part 1204 located downstream of the fifth movable part 1205 in the direction of transport stops at a position ep4 located downstream of the position eP5 in the direction of transport only by an interval P5. Likewise, the third movable part 1203 to the first movable part 1201 respectively stop at positions ep3 to ep1. The intervals of ep1 to eP5 each are P5. The first movable part 1201 to the fifth movable part 1205 stop in the discharge place with the intervals P5 provided therebetween.

After the movable parts 1201 to 1205 have stopped, the discharge pusher 210 of the discharge unit 200 slides outward from the center side of the transport path (that is, from the proximal side to the distal side of the blades 130) as illustrated in Fig. 5B, and collectively pushes out the products S1 to S4 each housed between corresponding two of the blades 1301 to 1305. The interval of two blades 130, 130 adjacent to each other is increased from P4 to P5 in Fig. 4A; however, since the product S is in a state of being compressed between the blades 130, 130 in the direction of transport, the width of the product S in the direction of transport is not immediately increased to P5. The width of each product S is maintained substantially equal to the interval P4 between the blades 130, 130 at least during the pushing-out operation in which the products S are pushed to the outside by the discharge pusher 210. When the discharge pusher 210 collectively pushes out the products S1 to S4, the frictional force generated between the products S1 to S4 and the blades 1301 to 1305 is decreased and the products S1 to S4 can be smoothly discharged.

The length L210 of the discharge pusher 210 in the longitudinal direction is adjusted in accordance with the interval P5 between the blades 130, 130 (the movable parts 120, 120) adjacent to each other in the direction of transport. In Fig. 5B, the length L210 is substantially equal to four times the interval P5 (that is, the widths of four compressed products S). This can make it possible to stably discharge a plurality of products S with a single discharge operation. Moreover, a product other than those S1 to S4, which are to be discharged in the discharge operation, is suppressed from being erroneously discharged.

In the transport apparatus 1 according to this embodiment, when the products S1 to S4 each housed between the corresponding two of the blades 1301 to 1305 are pushed out, a product S is not housed between the first blade 1301 (the first movable part 1201) located the most downstream in the direction of transport and a zeroth blade 1300 (a zeroth movable part 1200) provided further downstream of the first blade 1301. Likewise, a product S is not housed between the fifth blade 1305 (the fifth movable part 1205) located the most upstream in the direction of transport and a sixth blade 1306 (a sixth movable part 1206) provided further upstream of the fifth blade 1305 (see Fig. 5B). That is, in a certain discharge operation, when a plurality of (for example, four) products S continuously arranged side by side in the direction of transport is defined as a first product group SG1 to be discharged, and when a plurality of (for example, four) products S is defined as a second product group SG2 to be discharged in the next discharge operation, a product S is not housed at least between the movable part 120 (the blade 130) located the most upstream in the direction of transport among the movable parts 120 that transport the first product group SG1 and the movable part 120 (the blade 130) located the most downstream in the direction of transport among the movable parts 120 that transport the second product group SG2.

If another product So is continuously arranged between the first product group SG1 and the second product group SG2 in the direction of transport, when the discharge pusher 210 collectively discharges the first product group SG1, this other product So may be dragged by the first product group SG1 and discharged together with the first product group SG1 by the influence of the frictional force that acts between the product group SG and the other product So. In contrast, by avoiding arrangement of the product So between the first product group SG1 and the second product group SG2 as described above, the product So is suppressed from being erroneously discharged. Even when the stop position of the movable part S1201 is deviated from the operation position of the discharge pusher 210 in the direction of transport, the other product So not included in the product group SG that is to be discharged is likely to be suppressed from being erroneously discharged.

After the first product group SG1 composed of the products S1 to S4 has been discharged, the discharge pusher 210 is returned to the original position (the position in Fig. 5A), and the first movable part 1201 to the fifth movable part 1205 move downstream of the discharge place in the direction of transport, as illustrated in Fig. 5C. Then, the sixth movable part 1206 (the fifth blade 1306) to a tenth movable part 1210 (a tenth blade 1310) that transports a second product group SG2, which is composed of a fifth product S5 to an eighth product S8 and is to be discharged in the next transport operation, move to the discharge place and stop. The discharge step is performed by repeating this operation.

As described with reference to Figs. 5A to 5C, in this embodiment, the discharge place is provided in the straight portion 110sb on the transport path, and the discharge operation is performed while the movable parts 120 that transport products S are stopped in the straight portion. Since the movable parts 120 are stopped in the predetermined discharge place and then perform discharge, a product group SG composed of a plurality of products S can be discharged from the same place (the position at which the discharge unit 200 is provided). Thus, even when the discharge operation is repeated, the discharge place is more likely to be stable, and such a stable discharge place is suitable for a manufacturing facility that intermittently manufactures products S in a large quantity.

The discharge place is straight, and thus when two blades 130, 130 adjacent to each other in the direction of transport compress a product S housed therebetween, the two blades 130, 130 easily maintain a parallel positional relationship and can perform compression and/or the like evenly on the product S. When the transport path is linear, it becomes possible to correctly adjust the interval of two blades 130, 130 by controlling the interval between two movable parts 120, 120 adjacent to each other in the direction of transport. Accordingly, the operation of collectively discharging a plurality of products S can be further correctly performed.

### (Return Step)

After products S have been discharged in the discharge place, the control unit 500 causes the movable parts 120 (the blades 130) to move from the discharge place to the housing place along the transport path, and brings the movable parts 120 into a standby state for the next housing operation. In Fig. 1, the movable parts 120 move on the round portion 110rb in the direction of transport. In the return step, the movable parts 120 (the blades 130) only move on the transport path without transporting products S. Thus, the speed at which the movable parts 120 moves on the rail 110 (movement speed) can be made higher than the speed in the transport step or other steps. That is, in the direction of transport, the region from the discharge place to the housing place on the transport path has a segment in which the movement speed of the movable part 120 is higher than that in the region from the housing place to the discharge place on the transport path. Since there is no possibility that a product S is released or the position thereof is deviated in the middle of movement even if the movable parts 120 are moved at a high speed, the movable parts 120 can be swiftly returned to the housing place, thereby being able to efficiently perform the transport operation.

### = Other Embodiments =

The embodiment of the disclosure has been described above; however, the above-described embodiment is for easier understanding of the disclosure, and is not for limitedly interpreting the disclosure. The disclosure can be changed and improved without departing from the scope of the disclosure, and as a matter of course the disclosure contains equivalents to the embodiment. For example, the following modifications can be made.

### (Relationship between Housing Place and Discharge Place)

In the above-described embodiment, as illustrated in Fig. 1, the round portion 110ra is provided between the housing place and the discharge place for a product S. However, the round portion does not have to be provided between the housing place and the discharge place, and the housing place and the discharge place may be provided on a straight line of the transport path. In other words, a product S may be transported from the housing place to the discharge place without passing through the round portion on the transport path. For example, in Fig. 1, the discharge unit 200 may be provided downstream, in the direction of transport, of the position at which the charge port IS is provided, in the straight portion 110sa, and the housing place and the discharge place may be provided on the straight portion 110sa.

Since a product S is transported from a housing unit to the discharge unit without passing through the round portion, the product S is suppressed from being released from between two blades 130, 130 by the centrifugal force occurring during passing through the round portion, or the position at which the product S is held is suppressed from being deviated due to increase in the interval between the distal ends of the blades 130. Accordingly, the product S can be more stably transported.

### (Numbers of Movable Parts 120 and Blades 130)

In the above-described embodiment, a product S is housed between two blades 130 (two movable parts 120) adjacent to each other in the direction of transport and is transported. That is, a product S is transported by a pair of blades 130. However, the blades 130 for housing a product S are not limited to a pair of blades 130, and a product S may be housed in two or more pairs of blades 130 and transported thereby.

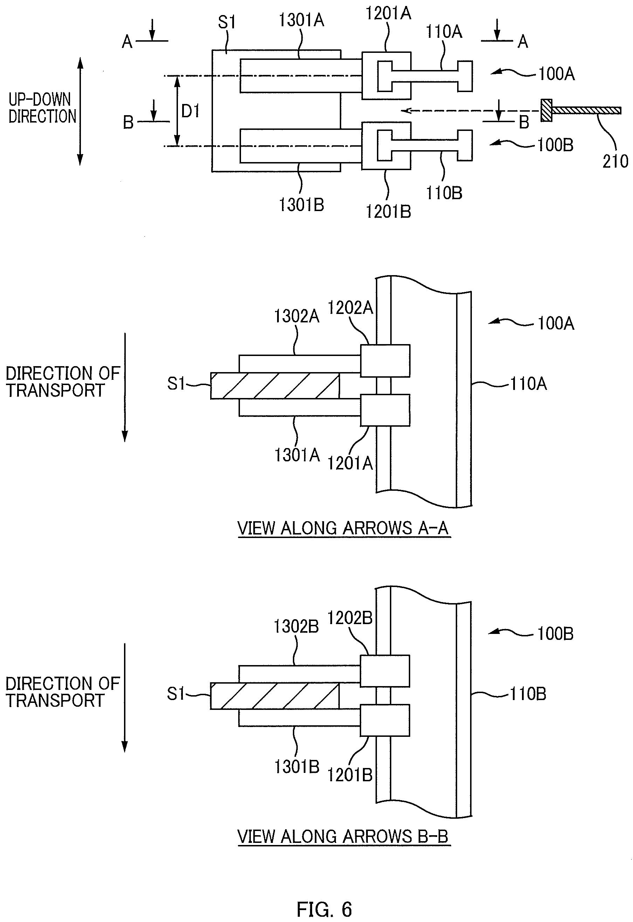

Fig. 6 illustrates a state in which a product S is housed by two pairs of blades 130. In Fig. 6, a transport unit 100A and a transport unit 100B having configurations and functions substantially similar to those of the transport unit 100 described in Fig. 1 are provided with a predetermined interval D1 in an up-down direction (a direction perpendicular to the paper face of Fig. 1). That is, the transport unit 100A includes a rail 110A, movable parts 120A, and blades 130A. A plurality of the movable parts 120A each freely moves on the rail 110A under the control of the control unit 500. The transport unit 100B provided below the transport unit 100A includes a rail 110B, movable parts 120B, and blades 130B. A plurality of the movable parts 120B each freely moves on the rail 110B under the control of the control unit 500.

The rails 110A and 110B define transport paths (orbits) with the same shape. The movable parts 120A and 120B can synchronously move respectively on the transport paths (the rails 110A, 110B). In Fig. 6, a product S is housed between a pair of blades 1301A, 1302A adjacent to each other in the direction of transport on the rail 110A (see a view along arrows A-A of Fig. 6), and the product S is housed between another pair of blades 1301B, 1302B adjacent to each other in the direction of transport on the rail 110B (see a view along arrows B-B of Fig. 6). That is, the product S is held by the two pairs of blades. In this state, movable parts 1201A, 1202A, 1201B, 1202B synchronously move on the transport paths, thereby being able to correctly transport and discharge the product S similarly to the above-described transport apparatus 1. That is, the lower movable part 120A and the upper movable part 120B cooperatively transport the product S.

In this way, since one product S is held by using two pairs of upper and lower blades, the interval in the direction of transport between the pair of upper blades 130, 130 can made different in the up-down direction from the interval in the direction of transport between the lower pair of blades 130, 130. For example, even when the thickness of a product S varies in the up-down direction, the product S can be transported or subjected to other operation while the interval between one pair of blades 1301A, 1302A is decreased and the interval between the other pair of blades 1301B, 1302B is increased. Moreover, a product can be transported by using only the lower blades 130 (the movable parts 120) without using the upper blades 130 (the movable parts 120) in accordance with the size of the product S.

Since an upper region of the product S is held by the pair of blades 1301A, 1302A and a lower region of the product S is held by the pair of blades 1301B, 1302B, the product S is more stably held in the up-down direction. Thus, the product is likely to be suppressed from being bent or tilted in the up-down direction in each of the housing step, the transport step, and the discharge step. Also, since the predetermined interval D1 is provided between one pair of blades 1301A, 1302A and the other pair of blades 1301B, 1302B, the discharge pusher 210 can slide into an area of the interval D1 in the discharge step. As described above, the discharge pusher 210 slides from the proximal side to the distal side of blades 130, thereby pushing out the product S housed between the blades 130, 130 to the outside (the distal side). At this time, the discharge pusher 210 moves in the area of the interval D1, thereby being able to push a center portion and its periphery in the up-down direction of the product S. Hence, the force of the discharge pusher 210 to push out the product S is more likely to be uniformly applied, so that the discharge operation for the product S is more likely to be stably performed.

### Reference Signs List

1 transport apparatus (product transport apparatus),
100 transport unit, 100A transport unit, 100B transport unit,
110 rail, 110A rail, 110B rail,
110sa straight portion, 110sb straight portion, 110ra round portion, 110rb round portion,
120 movable part, 100A movable part, 100B movable part,
1201 first movable part, 1202 second movable part, 1203 third movable part,
1204 fourth movable part, 1205 fifth movable part, 1206 sixth movable part,
1201A movable part, 1202A movable part, 1201B movable part, 1202B movable part,
130 blade, 130A blade, 130B blade,
1301 first blade, 1302 second blade, 1303 third blade,
1304 fourth blade, 1305 fifth blade, 1306 sixth blade,
1301A blade, 1302A blade, 1301B blade, 1302B blade,
200 discharge unit, 210 discharge pusher,
500 control unit,
600 detection sensor,
700 position adjusting device,
P0 to P5 interval,
S product, S1 to S4 product,
SG product group, SG1, SG2 product group,
SW width,
L210 length

## Claims

1. A product transport apparatus (1), comprising:
a rail (110) that defines an orbital transport path;
a plurality of movable parts (120) that move along the rail (110);
blades (130) respectively supported by the plurality of the movable parts (120); and
a control unit (500) capable of individually controlling positions of the movable parts (120) on the transport path,
the product transport apparatus (1) being configured to transport a product in a direction of transport along the transport path,
the plurality of the movable parts (120) including
a first movable part (1201) that supports a first blade (1301), and
a second movable part (1202) that is provided adjacent to an upstream side of the first movable part (1201) in the direction of transport and that supports a second blade (1302),
the transport path having provided thereon
a housing place for housing the product between the first blade (1301) and the second blade (1302),
a passing place through which the product passes while being housed between the first blade (1301) and the second blade (1302), and
a discharge place for discharging the product from between the first blade (1301) and the second blade (1302),
the control unit (500) being configured to
control positions of the first movable part (1201) and the second movable part (1202), respectively, such that an interval between the first movable part (1201) and the second movable part (1202) in the direction of transport is a predetermined distance in the housing place, and
control the positions of the first movable part (1201) and the second movable part (1202), respectively, such that the interval is smaller than the predetermined distance in the passing place,
the plurality of the movable parts (120) further including a third movable part (1203) that is provided adjacent to an upstream side of the second movable part (1202) in the direction of transport and that supports a third blade (1303), the second blade (1302) and the third blade (1303) being configured to house the product therebetween,
the control unit (500) being configured to
control positions of the second movable part (1202) and the third movable part (1203), respectively, such that an interval between the second movable part (1202) and the third movable part (1203) in the direction of transport is the predetermined distance in the housing place, and
control positions of the second movable part (1202) and the third movable part (1203), respectively, such that the interval is smaller than the predetermined distance in the passing place,
discharge being performed in the discharge place such that the product housed between the first blade (1301) and the second blade (1302) and the product housed between the second blade (1302) and the third blade (1303) are collectively discharged, **characterized in that**
the control unit (500) controls, in the passing place,
the interval between the first movable part (1201) and the second movable part (1202) to be a first interval that is smaller than the predetermined distance, and then
the positions of the first movable part (1201) and the second movable part (1202), respectively, such that the interval between the first movable part (1201) and the second movable part (1202) is a second interval that is smaller than the first interval.

2. The product transport apparatus according to claim 1, wherein
the control unit (500) controls the positions of the first movable part (1201) and the second movable part (1202), respectively, such that the interval between the first movable part (1201) and the second movable part (1202) in the direction of transport is smaller than the predetermined distance in the discharge place.

3. The product transport apparatus according to claim 1 or 2, wherein
the control unit (500) controls, in the passing place, the position of the third movable part (1203) such that the interval between the second movable part (1202) and the third movable part (1203) in the direction of transport is equal to the interval between the first movable part (1201) and the second movable part (1202) in the direction of transport.

4. The product transport apparatus according to any one of claims 1 to 3, wherein
the control unit (500) controls, in the passing place,
the interval between the first movable part (1201) and the second movable part (1202) to be the second interval that is smaller than the first interval, and then the positions of the first movable part (1201) and the second movable part (1202), respectively, such that the interval between the first movable part (1201) and the second movable part (1202) is a third interval that is larger than the first interval.

5. The product transport apparatus according to claim 4, wherein
a round portion, where the transport path being curved, is provided between the housing place and the discharge place, and
the control unit (500) controls, after the movable parts have passed through the round portion and before the movable parts arrive in the discharge place, the positions of the first movable part (1201) and the second movable part (1202), respectively, such that the interval between the first movable part (1201) and the second movable part (1202) is a fourth interval that is smaller than the third interval.

6. The product transport apparatus according to any one of claims 1 to 5, wherein
a discharge unit is provided in the discharge place, and pushes out and discharges, to outside of the product transport apparatus (1), the product housed between two of the blades adjacent to each other in the direction of transport, and
the discharge unit collectively discharges a product group composed of a predetermined number of the products arranged side by side adjacent to each other in the direction of transport.

7. The product transport apparatus according to claim 6, further comprising:
an n-th movable part that supports an n-th blade arranged most upstream in the direction of transport among a plurality of the blades housing the product group; and
an n+1-th movable part that is adjacent to the upstream side in the direction of transport of the n-th movable part and that supports an n+1-th blade, wherein
the product is not housed between the n-th blade and the n+1-th blade.

8. The product transport apparatus according to claim 6 or 7, wherein
the control unit (500) controls, before the product group is discharged by the discharge unit, a plurality of the movable parts (120) respectively supporting the plurality of the blades that house the product group, so as to stop at predetermined positions, respectively, in the discharge place.

9. The product transport apparatus according to any one of claims 6 to 8, wherein
the control unit (500) controls, in the discharge place, the positions of the first movable part (1201) and the second movable part (1202), respectively, such that the interval between the first movable part (1201) and the second movable part (1202) is a fifth interval that is larger than a minimum value of the interval between the first movable part (1201) and the second movable part (1202) when the product group is transported in the passing place.

10. The product transport apparatus according to any one of claims 1 to 9, wherein
the control unit (500) causes
the first movable part (1201) to stop at a predetermined position in the housing place, and
the position of the second movable part (1202) to move based on product detection information indicative of detection of charge of the product to the product transport apparatus (1).

11. The product transport apparatus according to any one of claims 1 to 4 and 6 to 11 when dependent on claim 5, wherein both the discharge place and the housing place are provided in a same straight portion on the transport path.

12. The product transport apparatus according to any one of claims 1 to 11, wherein
the product transport apparatus (1) has an up-down direction, and
the product transport apparatus (1) includes
an upper transport unit including the rail (110), the plurality of the movable parts (120), and the blades (130), and
a lower transport unit that is provided below the upper transport unit with a predetermined interval in the up-down direction and that includes the upper transport part including the rail (110), the plurality of the movable parts (120), and the blades (130), and
one of the movable parts (120) provided in the upper transport unit and a corresponding one of the movable parts provided in the lower transport unit cooperatively transport the product.

## Patentansprüche

1. Eine Produktfördervorrichtung (1), umfassend:
eine Schiene (110), die einen orbitalen Förderpfad definiert;
eine Vielzahl von beweglichen Teilen (120), die sich entlang der Schiene (110) bewegen;
Blätter (130), die jeweils von der Vielzahl der beweglichen Teile (120) getragen werden; und
eine Steuereinheit (500), die in der Lage ist, die Positionen der beweglichen Teile (120) auf dem Förderpfad individuell zu steuern,
wobei die Produktfördervorrichtung (1) ausgebildet ist, ein Produkt in einer Förderrichtung entlang des Förderpfades zu fördern,
wobei die Vielzahl der beweglichen Teile (120)
ein erstes bewegliches Teil (1201), das ein erstes Blatt (1301) trägt, und
ein zweites bewegliches Teil (1202), das angrenzend an eine in Förderrichtung vorgelagerte Seite des ersten beweglichen Teils (1201) vorgesehen ist und das ein zweites Blatt (1302) trägt, umfasst,
wobei auf dem Förderpfad
eine Aufnahmestelle zur Aufnahme des Produkts zwischen dem ersten Blatt (1301) und dem zweiten Blatt (1302),
eine Durchlaufstelle, die das Produkt durchläuft, während dieses zwischen dem ersten Blatt (1301) und dem zweiten Blatt (1302) aufgenommen ist, und
eine Entladungsstelle zum Entladen des Produkts zwischen dem ersten Blatt (1301) und dem zweiten Blatt (1302), vorgesehen ist,
wobei die Steuereinheit (500) ausgebildet ist die Positionen des ersten beweglichen Teils (1201) und des zweiten beweglichen Teils (1202) zu steuern, jeweils derart, dass ein Abstand zwischen dem ersten beweglichen Teil (1201) und dem zweiten beweglichen Teil (1202) in Förderrichtung ein vorbestimmter Abstand in der Aufnahmestelle ist, und
die Positionen des ersten beweglichen Teils (1201) und des zweiten beweglichen Teils (1302) zu steuern, jeweils derart, dass der Abstand kleiner ist als der vorbestimmte Abstand an der Durchlaufstelle,
wobei die Vielzahl der beweglichen Teile (120) ferner ein drittes bewegliches Teil (1203) umfasst, das benachbart zu einer vorgelagerten Seite des zweiten beweglichen Teils (1202) in der Förderrichtung vorgesehen ist und das ein drittes Blatt (1302) trägt, wobei das zweite Blatt (1302) und das dritte Blatt (1303) ausgebildet sind das Produkt dazwischen aufzunehmen,
wobei die Steuereinheit (500) ausgebildet ist
die Positionen des zweiten beweglichen Teils (1202) und des dritten beweglichen Teils (1203) zu steuern, jeweils derart, dass ein Intervall zwischen dem zweiten beweglichen Teil (1202) und dem dritten beweglichen Teil (1203) in Förderrichtung der vorbestimmte Abstand in der Aufnahmestelle ist, und
die Positionen des zweiten beweglichen Teils (1202) und des dritten beweglichen Teils (1203) zu steuern, jeweils derart, dass das Intervall kleiner als der vorbestimmte Abstand an der Durchgangsstelle ist,
wobei die Entladung an der Entladungsstelle derart durchgeführt wird, dass das Produkt, das zwischen dem ersten Blatt (1301) und dem zweiten Blatt (1302) aufgenommen ist, und das Produkt, das zwischen dem zweiten Blatt (1302) und dem dritten Blatt (1303) aufgenommen ist, gemeinsam entladen werden, **dadurch gekennzeichnet, dass**
die Steuereinheit (500), an der Durchgangsstelle,
das Intervall zwischen dem ersten beweglichen Teil (1201) und dem zweiten beweglichen Teil (1202) steuert, dass dieses ein erstes Intervall ist, das kleiner als der vorbestimmte Abstand ist, und dann
die Positionen des ersten beweglichen Teils (1201) und des zweiten beweglichen Teils (1202) steuert, jeweils derart, dass das Intervall zwischen dem ersten beweglichen Teil (1201) und dem zweiten beweglichen Teil (1202) ein zweites Intervall ist, das kleiner als das erste Intervall ist.

2. Produktfördervorrichtung gemäß Anspruch 1, wobei
die Steuereinheit (500) die Positionen des ersten beweglichen Teils (1201) und des zweiten beweglichen Teils (1202) jeweils derart steuert, dass das Intervall zwischen dem ersten beweglichen Teil (1201) und dem zweiten beweglichen Teil (1202) in Förderrichtung kleiner als der vorbestimmte Abstand an der Entladungsstelle ist.

3. Produktfördervorrichtung gemäß Anspruch 1 oder 2, wobei
die Steuereinheit (500) an der Durchgangsstelle die Position des dritten beweglichen Teils (1203) derart steuert, dass der Abstand zwischen dem zweiten beweglichen Teil (1202) und dem dritten beweglichen Teil (1203) in der Förderrichtung gleich dem Abstand zwischen dem ersten beweglichen Teil (1201) und dem zweiten beweglichen Teil (1202) in der Förderrichtung ist.

4. Produktfördervorrichtung gemäß einem der Ansprüche 1 bis 3, wobei
die Steuereinheit (500), an der Durchgangsstelle,
das Intervall zwischen dem ersten beweglichen Teil (1201) und dem zweiten beweglichen Teil (1202) steuert, dass dieses das zweite Intervall ist, das kleiner als das erste Intervall ist, und dann
die Positionen des ersten beweglichen Teils (1201) und des zweiten beweglichen Teils (1202) jeweils derart, dass das Intervall zwischen dem ersten beweglichen Teil (1201) und dem zweiten beweglichen Teil (1202) ein drittes Intervall ist, das größer als das erste Intervall ist.

5. Produktfördervorrichtung gemäß Anspruch 4, wobei
ein runder Abschnitt, bei welchem der Förderpfad gekrümmt ist, zwischen der Aufnahmestelle und der Entladungsstelle vorgesehen ist, und
die Steuereinheit (500), nachdem die beweglichen Teile den runden Abschnitt durchlaufen haben und bevor die beweglichen Teile an der Entladungsstelle ankommen, die Positionen des ersten beweglichen Teils (1201) und des zweiten beweglichen Teils (1202) steuert, jeweils derart, dass das Intervall zwischen dem ersten beweglichen Teil (1201) und dem zweiten beweglichen Teil (1202) ein viertes Intervall ist, das kleiner als das dritte Intervall ist.

6. Produktfördervorrichtung gemäß einem der Ansprüche 1 bis 5, wobei
eine Entladungseinheit an der Entladungsstelle vorgesehen ist, die das Produkt, das zwischen zwei in Förderrichtung nebeneinander liegenden Blättern aufgenommen ist, nach außerhalb der Produktfördervorrichtung (1) schiebt und entlädt, und
wobei die Entladungseinheit gemeinsam eine Produktgruppe entlädt, die aus einer vorbestimmten Anzahl von Produkten besteht, die in Förderrichtung nebeneinander angeordnet sind.

7. Produktfördervorrichtung gemäß Anspruch 6, ferner umfassend:
ein n-tes bewegliches Teil, das ein n-tes Blatt trägt, das in der Förderrichtung am vorgelagertsten unter einer Vielzahl der Blätter, in welchen die Produktgruppe aufgenommen ist, angeordnet ist; und
ein n+1-tes bewegliches Teil, das an die vorgelagerte Seite in Förderrichtung des n-ten beweglichen Teils angrenzt und das ein n+1-tes Blatt trägt, wobei
das Produkt nicht zwischen dem n-ten Blatt und dem n+1-ten Blatt aufgenommen ist.

8. Produktfördervorrichtung gemäß Anspruch 6 oder 7, wobei
die Steuereinheit (500) vor der Entladung der Produktgruppe durch die Entladungseinheit eine Vielzahl der beweglichen Teile (120) steuert, die jeweils die Vielzahl der Blätter tragen, in welchen die Produktgruppe aufgenommen ist, so dass diese jeweils an vorbestimmten Positionen an der Entladungsstelle anhalten.

9. Produktfördervorrichtung gemäß einem der Ansprüche 6 bis 8, wobei
die Steuereinheit (500) an der Entladungsstelle die Positionen des ersten beweglichen Teils (1201) und des zweiten beweglichen Teils (1202) steuert, jeweils derart, dass das Intervall zwischen dem ersten beweglichen Teil (1201) und dem zweiten beweglichen Teil (1202) ein fünftes Intervall ist, das größer als ein Minimalwert des Intervalls zwischen dem ersten beweglichen Teil (1201) und dem zweiten beweglichen Teil (1202) ist, wenn die Produktgruppe an der Entladungsstelle gefördert wird.

10. Produktfördervorrichtung gemäß einem der Ansprüche 1 bis 9, wobei
die Steuereinheit (500) veranlasst, dass
das erste bewegliche Teil (1201) an einer vorbestimmten Position an der Aufnahmestelle anhält, und dass
sich die Position des zweiten beweglichen Teils (1202) basierend auf der Produkterfassungsinformation, die die Erfassung der Ladung des Produkts für die Produktfördervorrichtung (1) anzeigt, bewegt.

11. Produktfördervorrichtung gemäß einem der Ansprüche 1 bis 4 und 6 bis 11, wenn von 5 abhängig, wobei
sowohl die Entladungsstelle als auch die Aufnahmestelle in einem gleichen geraden Abschnitt auf dem Förderpfad vorgesehen sind.

12. Produktfördervorrichtung gemäß einem der Ansprüche 1 bis 11, wobei
die Produktfördervorrichtung (1) eine Aufwärts-Abwärts-Richtung aufweist, und wobei die Produktfördervorrichtung (1)
eine obere Fördereinheit, die die Schiene (110), die Vielzahl der beweglichen Teile (120) und die Blätter (130) umfasst, und
eine untere Fördereinheit, die unterhalb der oberen Fördereinheit mit einem vorbestimmten Intervall in der Aufwärts-Abwärts-Richtung vorgesehen ist und die die oberen Fördereinheit einschließlich der Schiene (110), der Vielzahl der beweglichen Teile (120) und der Blätter (130) umfasst, umfasst und wobei
eines der beweglichen Teile (120), die in der oberen Fördereinheit vorgesehen sind, und ein korrespondierendes der beweglichen Teile, die in der unteren Fördereinheit vorgesehen sind, das Produkt zusammenwirkend transportieren.

## Revendications

1. Appareil de transport de produits (1), comprenant :
un rail (110) qui définit un trajet de transport orbital ;
une pluralité de parties mobiles (120) qui se déplacent le long du rail (110) ;
des aubes (130) supportées respectivement par la pluralité de parties mobiles (120) ; et
une unité de commande (500) capable de commander individuellement des positions des parties mobiles (120) sur le trajet de transport,
l'appareil de transport de produits (1) étant conçu pour transporter un produit dans une direction de transport le long du trajet de transport,
la pluralité de parties mobiles (120) comportant
une première partie mobile (1201) qui supporte une première aube (1301), et
une deuxième partie mobile (1202) qui est prévue adjacente à un côté amont de la première partie mobile (1201) dans la direction de transport et qui supporte une deuxième aube (1302),
le trajet de transport sur lequel sont prévus
un lieu de logement pour loger le produit entre la première aube (1301) et la deuxième aube (1302),
un lieu de passage à travers lequel le produit passe tout en étant logé entre la première aube (1301) et la deuxième aube (1302), et
un lieu d'évacuation pour évacuer le produit d'entre la première aube (1301) et la deuxième aube (1302),
l'unité de commande (500) étant conçue pour
commander des positions de la première partie mobile (1201) et de la deuxième partie mobile (1202), respectivement, de sorte qu'un intervalle entre la première partie mobile (1201) et la deuxième partie mobile (1202) dans la direction de transport soit une distance prédéterminée dans le lieu de logement, et
commander les positions de la première partie mobile (1201) et de la deuxième partie mobile (1202), respectivement, de sorte que l'intervalle soit plus petit que la distance prédéterminée dans le lieu de passage,
la pluralité de parties mobiles (120) comportant en outre une troisième partie mobile (1203) qui est prévue adjacente à un côté amont de la deuxième partie mobile (1202) dans la direction de transport et qui supporte une troisième aube (1303), la deuxième aube (1302) et la troisième aube (1303) étant conçues pour loger le produit entre elles,
l'unité de commande (500) étant conçue pour
commander des positions de la deuxième partie mobile (1202) et de la troisième partie mobile (1203), respectivement, de sorte qu'un intervalle entre la deuxième partie mobile (1202) et la troisième partie mobile (1203) dans la direction de transport soit la distance prédéterminée dans le lieu de logement, et
commander des positions de la deuxième partie mobile (1202) et de la troisième partie mobile (1203), respectivement, de sorte que l'intervalle soit plus petit que la distance prédéterminée dans le lieu de passage,
l'évacuation étant réalisée dans le lieu d'évacuation de sorte que le produit logé entre la première aube (1301) et la deuxième aube (1302) et le produit logé entre la deuxième aube (1302) et la troisième aube (1303) soient évacués collectivement,
**caractérisé en ce que**
l'unité de commande (500) commande, dans le lieu de passage,
l'intervalle entre la première partie mobile (1201) et la deuxième partie mobile (1202) pour qu'il soit un premier intervalle qui est plus petit que la distance prédéterminée, puis
les positions de la première partie mobile (1201) et de la deuxième partie mobile (1202), respectivement, de sorte que l'intervalle entre la première partie mobile (1201) et la deuxième partie mobile (1202) soit un deuxième intervalle qui est plus petit que le premier intervalle.

2. Appareil de transport de produits selon la revendication 1, dans lequel l'unité de commande (500) commande les positions de la première partie mobile (1201) et de la deuxième partie mobile (1202), respectivement, de sorte que l'intervalle entre la première partie mobile (1201) et la deuxième partie mobile (1202) dans la direction de transport soit plus petit que la distance prédéterminée dans le lieu d'évacuation.

3. Appareil de transport de produits selon la revendication 1 ou 2, dans lequel l'unité de commande (500) commande, dans le lieu de passage, la position de la troisième partie mobile (1203) de sorte que l'intervalle entre la deuxième partie mobile (1202) et la troisième partie mobile (1203) dans la direction de transport soit égal à l'intervalle entre la première partie mobile (1201) et la deuxième partie mobile (1202) dans la direction de transport.

4. Appareil de transport de produits selon l'une quelconque des revendications 1 à 3, dans lequel
l'unité de commande (500) commande, dans le lieu de passage,
l'intervalle entre la première partie mobile (1201) et la deuxième partie mobile (1202) pour qu'il soit le deuxième intervalle qui est plus petit que le premier intervalle, puis les positions de la première partie mobile (1201) et de la deuxième partie mobile (1202), respectivement, de sorte que l'intervalle entre la première partie mobile (1201) et la deuxième partie mobile (1202) soit un troisième intervalle qui est plus grand que le premier intervalle.

5. Appareil de transport de produits selon la revendication 4, dans lequel
une portion ronde, où le trajet de transport est incurvé, est prévue entre le lieu de logement et le lieu d'évacuation, et
l'unité de commande (500) commande, après que les parties mobiles sont passées à travers la portion ronde et avant que les parties mobiles arrivent dans le lieu d'évacuation, les positions de la première partie mobile (1201) et de la deuxième partie mobile (1202), respectivement, de sorte que l'intervalle entre la première partie mobile (1201) et la deuxième partie mobile (1202) soit un quatrième intervalle qui est plus petit que le troisième intervalle.

6. Appareil de transport de produits selon l'une quelconque des revendications 1 à 5, dans lequel
une unité d'évacuation est prévue dans le lieu d'évacuation, et pousse et évacue, vers l'extérieur de l'appareil de transport de produits (1), le produit logé entre deux des aubes adjacentes l'une à l'autre dans la direction de transport, et
l'unité d'évacuation évacue collectivement un groupe de produits composé d'un nombre prédéterminé des produits agencés côte à côte adjacents les uns aux autres dans la direction de transport.

7. Appareil de transport de produits selon la revendication 6, comprenant en outre :
une n^{ième} partie mobile qui supporte une n^{ième} aube agencée le plus en amont dans la direction de transport parmi une pluralité des aubes logeant le groupe de produits ; et
une n+1^{ième} partie mobile qui est adjacente au côté amont dans la direction de transport de la n^{ième} partie mobile et qui supporte une n+1^{ième} aube, dans lequel le produit n'est pas logé entre la n^{ième} aube et la n+1^{ième} aube.

8. Appareil de transport de produits selon la revendication 6 ou 7, dans lequel
l'unité de commande (500) commande, avant que le groupe de produits soit évacué par l'unité d'évacuation, une pluralité des parties mobiles (120) supportant respectivement la pluralité des aubes qui logent le groupe de produits, de façon à ce qu'elles s'arrêtent à des positions prédéterminées, respectivement, dans le lieu d'évacuation.

9. Appareil de transport de produits selon l'une quelconque des revendications 6 à 8, dans lequel
l'unité de commande (500) commande, dans le lieu d'évacuation, les positions de la première partie mobile (1201) et de la deuxième partie mobile (1202), respectivement, de sorte que l'intervalle entre la première partie mobile (1201) et la deuxième partie mobile (1202) soit un cinquième intervalle qui est plus grand qu'une valeur minimale de l'intervalle entre la première partie mobile (1201) et la deuxième partie mobile (1202) lorsque le groupe de produits est transporté dans le lieu de passage.

10. Appareil de transport de produits selon l'une quelconque des revendications 1 à 9, dans lequel
l'unité de commande (500) amène
la première partie mobile (1201) à s'arrêter à une position prédéterminée dans le lieu de logement, et
la position de la deuxième partie mobile (1202) à se déplacer d'après des informations de détection de produit indicatives d'une détection de charge du produit vers l'appareil de transport de produits (1).

11. Appareil de transport de produits selon l'une quelconque des revendications 1 à 4 et 6 à 11 lorsqu'elles dépendent de la revendication 5, dans lequel
le lieu d'évacuation et le lieu de logement sont tous deux prévus dans une même portion droite sur le trajet de transport.

12. Appareil de transport de produits selon l'une quelconque des revendications 1 à 11, dans lequel
l'appareil de transport de produits (1) a une direction haut-bas, et
l'appareil de transport de produits (1) comporte
une unité de transport supérieure comportant le rail (110), la pluralité des parties mobiles (120), et les aubes (130), et
une unité de transport inférieure qui est prévue en dessous de l'unité de transport supérieure avec un intervalle prédéterminé dans la direction haut-bas et qui comporte la partie de transport supérieure comportant le rail (110), la pluralité des parties mobiles (120), et les aubes (130), et
l'une des parties mobiles (120) prévue dans l'unité de transport supérieure et une partie correspondante des parties mobiles prévue dans l'unité de transport inférieure transportent coopérativement le produit.
